# EUROPEAN PATENT APPLICATION

(11) **EP 1 881 348 A1**
(43) Date of publication of application: **23.01.2008**
(21) Application number: 07107258.1
(22) Date of filing: 30.04.2007
(51) Int. Cl.: G02B 5/09, G02B 5/08

(54) **Polygonal mirror for a laser scanning unit**

(30) Priority: 18.07.2006 KR 20060067009
(71) Applicant: Samsung Electronics Co., Ltd., Seoul 442-742 (KR)
(72) Inventor: Hee-sung, CHO, , Gyeonggi-do (KR)
(74) Representative: Pisani, Diana Jean

(57) **Abstract**

A polygon mirror (103) for a laser scanning unit includes reflective surfaces (10) to reflect laser beams, and first, second and third dielectric layers (20, 30, 40) laminated on the reflective surfaces (10). The second dielectric layer (30) comprises titanium dioxide (TiO₂). The variation in reflectivity of the mirror (103) with incident angle and wavelength may be reduced to below 2%. The mirror (103) may thus be suitable for use with a blue laser diode (100) and/or with a light source that produces light of varying polarization, such as a Vertical-Cavity Surface-Emitting Laser (VCSEL).

## Description

The present invention relates to a polygon mirror and to a laser scanning unit and an image forming apparatus having the same.

Generally, a laser scanning unit is included in an electrophotographic printing apparatus, such as a laser printer, a copier or a fax machine. Such a laser scanning unit includes a light source for emitting laser beams, a polygon mirror for reflecting and scanning the beams in a predetermined direction, an Fθ lens for converting the reflected beams into parallel beams and a reflecting mirror for reflecting the parallel beams towards a predetermined destination.

The polygon mirror includes a plurality of reflective surfaces which can reflect incident light. The polygon mirror is rotated at a high speed to scan reflected light along a predetermined direction.

According to US 5,946,125, a first dielectric layer made of SiO₂, a second dielectric layer made of ZnSe (Zinc Selenide), and a third dielectric layer made of SiO₂ are sequentially coated on aluminium reflective surfaces of the polygon mirror. With such a structure, the reflective surfaces can be protected.

In such a conventional multi-coating type polygon mirror, where the incident angle ranges from 10° to 50°, an approximately constant reflectivity for light of S and P polarizations is maintained, due to an interference effect related to the thickness of the dielectric layers. However, the reflectivity can deviate by approximately 5% according to the wavelength of the laser beam. This reflectivity deviation restricts the use of the polygon mirror. The conventional multi-coating type polygon mirror maintains approximately constant reflectivity until the wavelength of the laser beam decreases to about 500nm. The reflectivity deviation then increases in the 400nm to 450nm band. As a result, the conventional polygon mirror does not function efficiently with light from a blue laser diode.

Furthermore, ZnSe, which is the material of the second dielectric layer, is expensive and poisonous. It is therefore difficult to handle ZnSe and achieve mass production of the conventional polygon mirror.

An object of the present invention is the provision of a polygon mirror which can maintain a constant reflectivity in various wavelength bands and which can be produced cheaply and consistently, a laser scanning unit having the same and an image forming apparatus having the same.

According to the present invention, a polygon mirror includes a plurality of reflective surfaces and first, second and third dielectric layers laminated on the reflective surfaces, wherein the second dielectric layer is made of TiO₂.

The first dielectric layer and the third dielectric layers may comprise the same material. For example, the first dielectric layer and the third dielectric layer may both comprise SiO₂. In such an example, the first dielectric layer may have a thickness of 0.19λ, the second dielectric layer may have a thickness of 0.36λ and the third dielectric layer may have a thickness of 0.25λ, where λ represents the wavelength of the beams incident on the reflective surfaces.

Alternatively, the first dielectric layer and the third dielectric layer comprise different materials. For example, the first dielectric layer may be made of SiO₂ while the third dielectric layer is made of Al₂O₃. In such an example, the first dielectric layer may have a thickness of 0.16λ, the second dielectric layer may have a thickness of 0.32λ, and the third dielectric layer may have a thickness of 0.26λ, where λ represents the wavelength of the incident beams.

The thickness of each of the first, second and third dielectric layers may have a tolerance of ±20%.

The reflective surfaces may comprise aluminum.

The invention also provides a laser scanning unit comprising such a polygon mirror and a light source, where the polygon mirror is arranged to reflect beams emitted from the light source onto an object. The laser scanning unit may further comprise means for rotating the polygon mirror to perform scanning of the object by light reflected by the polygon mirror.

The invention also provides an image forming apparatus comprising such a laser scanning unit and a photosensitive medium, the laser scanning unit being arranged to form an electrostatic latent image on the photosensitive medium.

Embodiments of the invention will now be described, by way of example, with reference to the accompanying drawings, of which:
FIG. 1 is a schematic diagram illustrating an image forming apparatus according to an embodiment of the present invention;
FIG. 2 is a schematic diagram illustrating the laser scanning unit shown in FIG. 1;
FIG. 3 is an enlarged view of a dielectric layer structure of the polygon mirror shown in FIG. 2;
FIG. 4 is a graph showing the variation of reflectivity for S and P polarized light for a polygon mirror according to a first embodiment of the present invention; and
FIG. 5 is a graph showing the variation of reflectivity for S and P polarized light for a polygon mirror according to a second embodiment of the present invention.

In the following detailed description and the accompanying drawings, like reference numerals refer to the like elements throughout.

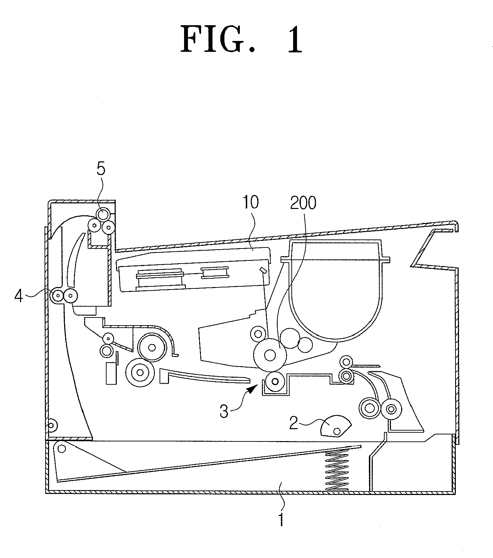

Referring to FIG. 1, an image forming apparatus according to an embodiment of the present invention includes a paper feeding unit 1, a transfer unit 2, a printing engine 3 having a photosensitive medium 200, a settling unit 4, a paper discharging unit 5 and a laser scanning unit 10 for forming an electrostatic latent image on the photosensitive medium 200. It is understood that the image forming apparatus may include other components instead of or in addition to the components shown in FIG. 1.

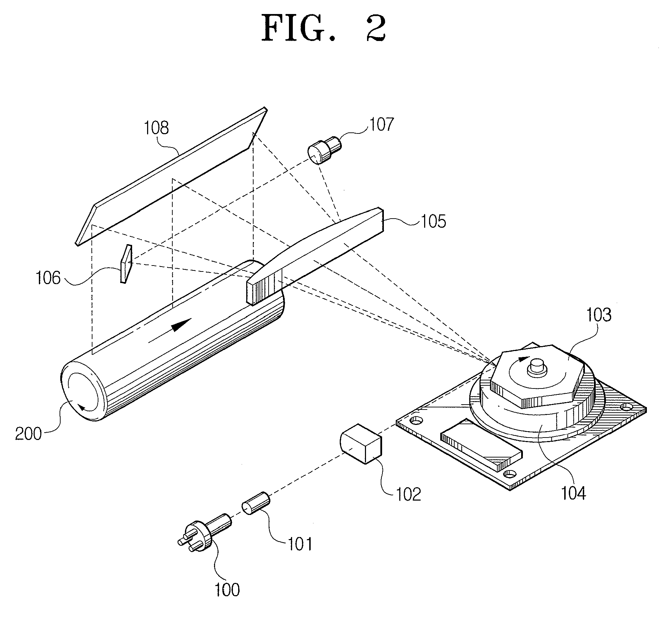

As shown in FIG. 2, the laser scanning unit 10 includes a laser diode 100, arranged to emit laser beams, a collimator lens 101 for converting the laser beams emitted from the laser diode 100 into parallel beams or beams converging onto an optical axis, a cylinder lens 102 to converge the beams emerging from the collimator 101 along a sub scanning direction, a polygon mirror 103 for reflecting the laser beams emerging from the cylinder lens 102 to scan along a scanning direction, which, in the example shown in FIG. 2, is a horizontal direction, with a uniform flux, and a polygon mirror driving motor 104 arranged to rotate the polygon mirror 103 at a regular speed. The laser scanning unit 10 further includes an Fθ lens 105 having a predetermined refraction rate to the optical axis, and which adjusts the focussing of the light on the scanning surface by polarizing the regular speed laser beams reflected by the polygon mirror 103 to a main scanning direction and which also corrects aberration, an image forming reflecting mirror 108 to form an electrostatic latent image on the surface of the photosensitive medium 200, which is an image forming surface, by reflecting the laser beams passing through the Fθ lens 105 to a predetermined direction, a first sensor 107 to receive the laser beams and to adjust horizontal synchronization and a synchronous signal detecting reflecting mirror 106 to reflect the laser beams to a synchronization detecting optical sensor. Generally, the aforementioned components are assembled on one frame to form the laser scanning unit 10. It is understood, however, that the aforementioned components may be assembled in various configurations and are not required to be assembled onto one frame to form the laser scanning unit 10.

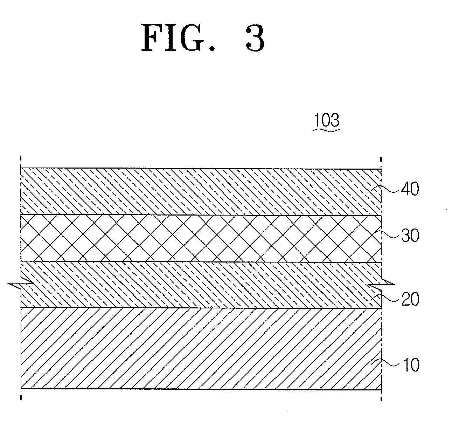

FIG. 3 is an enlarged view of the multilayered structure polygon mirror 103 of FIG. 2. The polygon mirror 103 comprises an aluminium reflective surface 10, on which a first dielectric layer 20, a second dielectric layer 30 and a third dielectric layer 40 are laminated and coated in sequence.

The first dielectric layer 20 and the third dielectric layer 40 may comprise the same material. For example, in a mirror according to a first embodiment of the present invention, the first dielectric layer 20 and the third dielectric layer 40 comprise SiO₂ and the second dielectric layer 30 comprises TiO₂. However, it is understood that the present invention is not limited to having dielectric layers and other types of layers may be used instead.

The following table shows the thicknesses of the first, second and third dielectric layers 20, 30 and 40 in the first embodiment, where λ represents the wavelength of the laser diode beams incident on the reflective surfaces 10.

**Table 1**

| | | |
|---|---|---|
| First dielectric layer | Material | SiO₂ |
| | Thickness | 0.19λ |
| Second dielectric layer | Material | TiO₂ |
| | Thickness | 0.36λ |
| Third dielectric layer | Material | SiO₂ |
| | Thickness | 0.25λ |

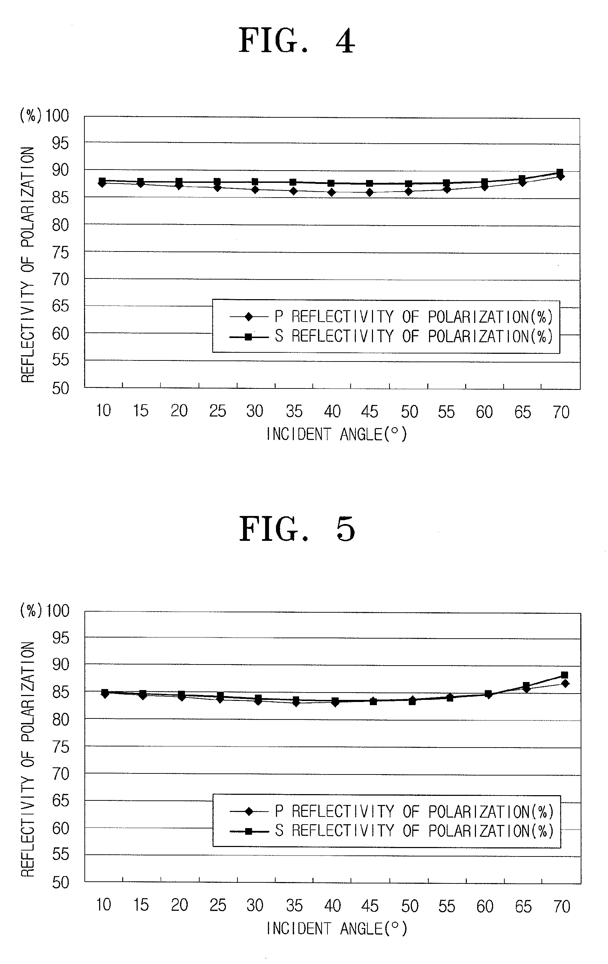

FIG. 4 is a graph showing experimental results of reflectivities (%) of S and P polarizations for the polygon mirror of the first embodiment of the present invention, where λ = 780nm.

Table 2 shows experiment values of the reflectivities as a function of incident angle.

**Table 2**

| Incident angle (degree) | Reflectivity of P polarization (%) | Reflectivity of S polarization (%) |
|---|---|---|
| 10 | 87.8 | 88.0 |
| 15 | 87.5 | 88.0 |
| 20 | 87.3 | 88.0 |
| 25 | 86.9 | 88.0 |
| 30 | 86.6 | 88.0 |
| 35 | 86.4 | 88.0 |
| 40 | 86.2 | 87.8 |
| 45 | 86.2 | 87.8 |
| 50 | 86.4 | 87.8 |
| 55 | 86.8 | 87.9 |
| 60 | 87.3 | 88.2 |
| 65 | 88.2 | 88.8 |
| 70 | 89.3 | 89.9 |

As shown in FIG. 4 and Table 2, for a range of incident angles from 10° to 70°, the reflectivity of the P polarization has a minimum of 86.2% and a maximum of 89.3%, resulting in a deviation of about 3%, and the reflectivity of the S polarization has a minimum of 87.8% and a maximum of 89.9%, resulting in a deviation of about 2%.

When it is considered that the most frequently used incident angles of the laser beams range from 10° to 50°, the reflectivity of the P polarization has a minimum of 86.2% and a maximum of 87.8%, resulting in a deviation of 1.6%, while the reflectivity of the S polarization has a minimum of 87.8% and a maximum of 88.0%, resulting in a deviation of 0.2%. Therefore, the polygon mirror of the first embodiment has a more stable reflectivity, costs less to manufacture and is safer to produce than a conventional polygon mirror.

In with a mirror according to a second embodiment of the present invention, the first dielectric layer 20 and the third dielectric layer 40 comprise different materials. In this particular example, the first dielectric layer 20 comprises SiO₂,the third dielectric layer 40 comprises Al₂O₃, and the second dielectric layer 30 comprises TiO₂.

The following table shows the thicknesses of the first, second and third dielectric layers 20, 30 and 40, respectively, as shown in FIG. 3, where λ represents the wavelength of the laser diode beams incident on the reflective surfaces 10.

**Table 3**

| | | |
|---|---|---|
| First dielectric layer | Material | SiO₂ |
| | Thickness | 0.16λ |
| Second dielectric layer | Material | TiO₂ |
| | Thickness | 0.32λ |
| Third dielectric layer | Material | Al₂O₃ |
| | Thickness | 0.26λ |

FIG. 5 is a graph showing experimental results of the reflectivities (%) of S and P polarized light for the polygon mirror of the second embodiment, where λ = 780nm.

Table 4 shows the variations of the reflectivity as a function of incident angle.

**Table 4**

| Incident angle (degree) | Reflectivity of P polarization | (%) Reflectivity of S polarization (%) |
|---|---|---|
| 10 | 84.7 | 84.8 |
| 15 | 84.4 | 84.7 |
| 20 | 84.1 | 84.5 |
| 25 | 83.8 | 84.3 |
| 30 | 83.5 | 84.0 |
| 35 | 83.3 | 83.7 |
| 40 | 83.3 | 83.5 |
| 45 | 83.5 | 83.4 |
| 50 | 83.8 | 83.6 |
| 55 | 84.3 | 84.0 |
| 60 | 84.9 | 85.0 |
| 65 | 85.8 | 86.4 |
| 70 | 87.1 | 88.4 |

As shown in FIG. 5 and Table 4, for a range of incident angles from 10° to 70°, the reflectivity of the P polarization has a minimum of 83.3% and a maximum of 87.1%, resulting in a deviation below 4%, and the reflectivity of the S polarization has a minimum of 83.4%% and a maximum of 88.4%, resulting in a deviation of 5%.

For the range of most frequently used incident angles, from 10° to 50°, the reflectivity of the P polarization has a minimum of 83.3% and a maximum of 84.7%, resulting in a deviation of 1.4%, while the reflectivity of the S polarization has a minimum of 83.4% and a maximum of 84.8%, resulting in a deviation of 1.4%. Therefore, the polygon mirror of the second embodiment has a more stable reflectivity, costs less to manufacture and is safer to produce than a conventional polygon mirror.

In the first and second embodiments of the present invention, each of the first to third dielectric layers 20, 30 and 40, respectively, as shown in FIG. 3, has a thickness error of up to ±20%.

While, in the above described embodiments, the reflective surfaces 10 comprise aluminum, the invention is not limited in this manner. In other words, the reflective surfaces 10 may comprise materials other than aluminum, such as a polymer compound having an excellent reflective properties.

The polygon mirror according to aspects of the present invention functions efficiently with various wavelengths of laser beams, as compared to the conventional polygon mirror. Table 5 shows the variation of reflectivities of P polarized light and S polarized light as a function of incident angle, when laser beams having different wavelengths are applied to the polygon mirror of the first embodiment of the present invention.

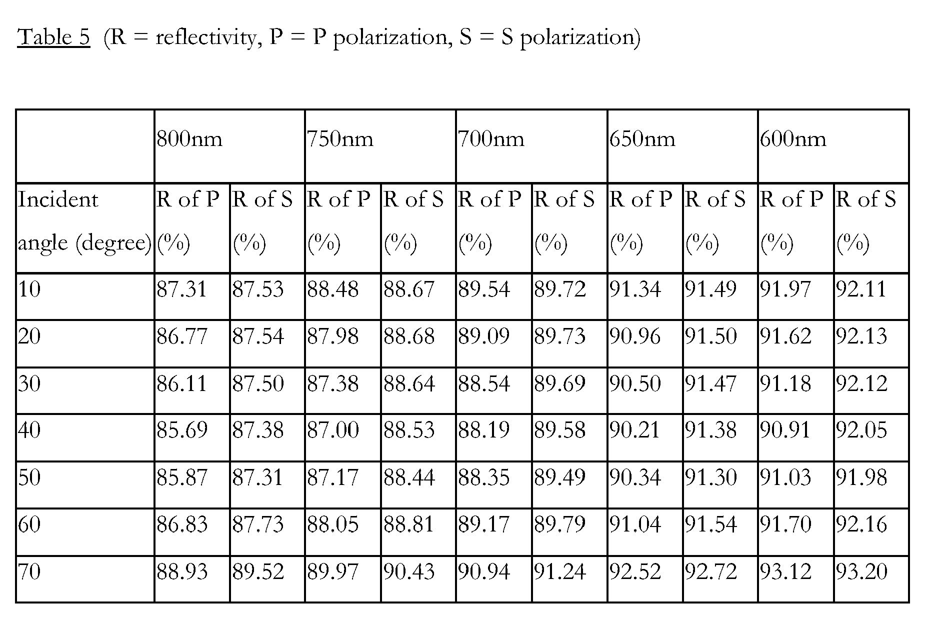

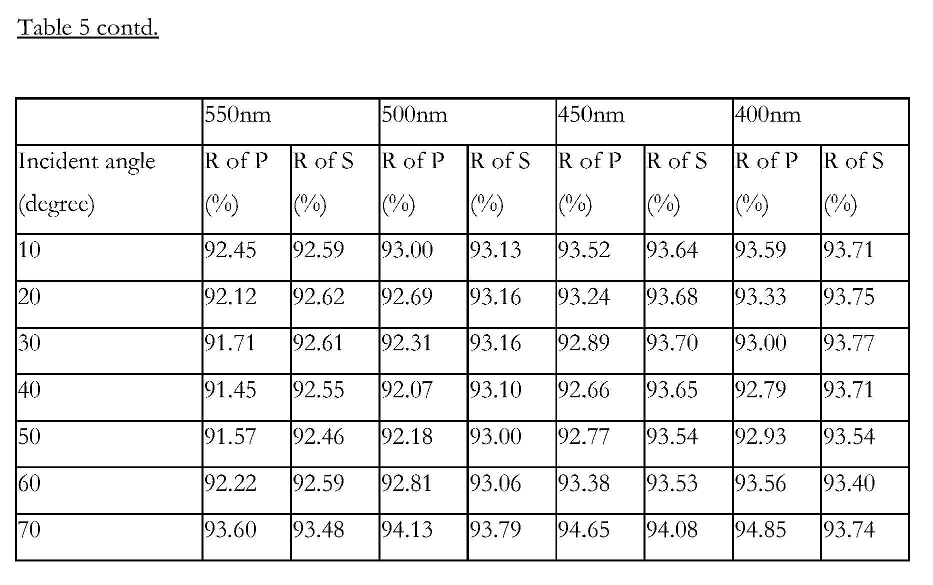

As shown in the above table, even when the wavelengths of the laser beams are varied from 400nm to 800nm, the reflectivities of the P polarized light and the S polarized light vary only slightly for each incident angle. In other words, the polygon mirror according to the present invention may maintain an approximately constant reflectivity for laser beams having various wavelengths. As shown in Table 5, the mirror according to a first embodiment of the present invention reduces the reflectivity deviation of the conventional polygon mirror (about 5%) caused by the wavelengths of the laser beams to below 2%.

When an image forming apparatus uses a conventional polygon mirror, constant reflectivity is maintained in the laser beams in the 800nm to 500nm band, but the reflectivity deviation exceeds 20% in the 400nm to 450nm band. However, since present invention allows the reflectivity deviation to be reduced to below 2%, even a laser scanning unit using a blue laser diode can reflect the laser beams at a regular concentration, thereby improving the quality of an image formed by an image forming apparatus.

Furthermore, the use of TiO₂, which is much cheaper than ZnSe, to coat the reflective surfaces of the polygon mirror can reduce the production cost of the polygon mirror, potentially providing a significant advantage for mass production of the polygon mirrors. Additionally, unlike ZnSe, TiO₂ is not poisonous, so the risk to the health of an operator of the image forming apparatus during operation is reduced. As a result, the polygon mirror according to embodiments of the present invention can be cheaply and safely mass-produced.

The polygon mirrors of the first and second embodiments can maintain a uniform reflectivity deviation for light sources having various wavelengths, and the polygon mirror may therefore be used with a light source whose polarization state is varied in real time, such as a Vertical-Cavity Surface-Emitting Laser (VCSEL). As a result, the polygon mirrors are capable of scanning high quality images without concentration variations.

Although a few embodiments of the present invention have been shown and described, it would be appreciated by those skilled in the art that changes may be made in this embodiment without departing from the principles of the invention, the scope of which is defined in the appended claims.

## Claims

1. A polygon mirror (103), comprising:
reflective surfaces (10) to reflect light; and
first, second and third dielectric layers (20, 30, 40) sequentially laminated on the reflective surfaces (10);
wherein the second dielectric layer (30) is made of TiO₂.

2. The polygon mirror (103) as claimed in claim 1, wherein the first dielectric layer (20) and the third dielectric layer (40) are made of the same material.

3. The polygon mirror (103) as claimed in claim 2, wherein the first dielectric layer (20) and the third dielectric layer (40) comprise SiO₂.

4. The polygon mirror (103) as claimed in claim 3, configured to reflect incident light having a predetermined wavelength of λ, the first dielectric layer (20) having a thickness of 0.19λ, the second dielectric layer (30) having a thickness of 0.36λ and the third dielectric layer (40) having a thickness of 0.25λ.

5. The polygon mirror (103) as claimed in claim 1, wherein the first dielectric layer (20) and the third dielectric layer (40) comprise different materials.

6. The polygon mirror (103) as claimed in claim 5, wherein the first dielectric layer (20) comprises SiO₂ and the third dielectric layer (40) comprises Al₂O₃.

7. The polygon mirror (103) as claimed in claim 6, configured to reflect incident light having a predetermined wavelength of λ, the first dielectric layer (20) having a thickness of 0.16λ, the second dielectric layer (30) having a thickness of 0.32λ and the third dielectric layer (40) having a thickness of 0.26λ.

8. The polygon mirror (103) as claimed in any of the preceding claims, wherein the thickness of each of the first, second and third dielectric layers (20, 30, 40) has a tolerance of ±20%.

9. The polygon mirror (103) of any of the preceding claims, wherein the reflective surfaces (10) comprise aluminum.

10. A laser scanning unit (10), comprising:
a light source (100) arranged to generate light of a predetermined wavelength; and
a polygon mirror (103) according to any of the preceding claims, arranged to reflect the light emitted from the light source (100) towards an object to be scanned.

11. The laser scanning unit (10) of claim 10, wherein the light source (100) comprises a Vertical-Cavity Surface-Emitting Laser (VCSEL).

12. An image forming apparatus, comprising:
a photosensitive medium (200); and
a laser scanning unit (10) according to claim 10 or 11, arranged to form an electrostatic latent image on the photosensitive medium (200).
